# EUROPEAN PATENT APPLICATION

(11) **EP 4 567 750 A1**
(43) Date of publication of application: **11.06.2025**
(21) Application number: 23214744.7
(22) Date of filing: 06.12.2023
(51) Int. Cl.: G06V 20/59

(54) **IMAGE-BASED VEHICLE CABIN SENSING AND VEHICLE EQUIPMENT OPERATION**

(71) Applicant: Aptiv Technologies AG, 8200 Schaffhausen (CH)
(72) Inventor: Rehfeld, Timo, 51109 Köln (DE); Weyers, Patrick, 44263 Dortmund (DE); Zhang, Xuebing, 42119 Wuppertal (DE)
(74) Representative: Bardehle Pagenberg Partnerschaft mbB Patentanwälte Rechtsanwälte

(57) **Abstract**

The present disclosure provides for techniques for image-based vehicle cabin sensing and vehicle equipment operation. Such measures include a method comprising detecting, from one or more images of at least part of the vehicle cabin, one or more seat parts of at least one seat in the vehicle cabin and, for each detected seat part, a seat part attribute, and estimating one or more seat parameters of the at least one seat on the basis of the detected one or more seat part attributes, the one or more seat parameters of a seat being indicative of a spatial configuration of the seat in the vehicle cabin.

## Description

### FIELD

The present disclosure generally relates to safety, comfort and/or personalization improvements for vehicles and, in particular, to methods, apparatuses, systems and computer program products of/for facilitating vehicle operation, such as sensing a vehicle cabin and/or operating a vehicle equipment.

### BACKGROUND

Modern vehicles, such as cars, busses, trucks and the like, are typically equipped with one or more onboard cameras which are cable of capturing images of the vehicle's interior, such as the vehicle cabin. Those images can be used for various purposes in the context of vehicle control. For example, various elements of vehicle equipment, such as e.g. airbags, may be controlled using those images, potentially together with input from sensors disposed in the vehicle's interior, such as the vehicle cabin.

The present disclosure aims at providing improvement with regard to the use of images from one or more onboard cameras.

### SUMMARY

In this context, methods, apparatuses, systems and computer program products are presented as defined by the claims.

According to an aspect of the present disclosure, there is provided a method, which may be regarded or referred to as method of facilitating vehicle operation or vehicle operation facilitating method and/or as method of sensing a vehicle cabin or (vehicle cabin) sensing method. The method comprises detecting, from one or more images of at least part of the vehicle cabin, one or more seat parts of at least one seat in the vehicle cabin and, for each detected seat part, a seat part attribute, and estimating one or more seat parameters of the at least one seat on the basis of the detected one or more seat part attributes (of the respective seat), the one or more seat parameters of a seat being indicative of a spatial configuration of the seat in the vehicle cabin.

In embodiments, a seat part attribute comprises a bounding box of the detected seat part, the bounding box of a seat part surrounding said seat part in the one or more images, and/or a specific point or location of the detected seat part in the one or more images.

In embodiments, the one or more seat parameters are estimated using geometric modeling. In further embodiments, when using geometric modeling, the estimating the one or more seat parameters comprises determining geometric features of at least part of the detected one or more seat part attributes and/or a relationship between one or more groups of at least two detected seat part attributes, and calculating the one or more seat parameters on the basis of the determined geometric features. In this regard, the geometric features may comprise one or more of a position of a seat part attribute, a size of a seat part attribute, a shape of a seat part attribute, a relative two-dimensional, horizontal and/or vertical position between two or more seat part attributes. Additionally or alternatively, calculating the one or more seat parameters may utilize a linear least-squares method or a Levenberg-Marquart algorithm.

In embodiments, the one or more seat parameters are estimated using a neural network. In further embodiments, when using a neural network, the estimating the one or more seat parameters comprises inputting the detected one or more seat part attributes into the neural network, and receiving the one or more seat parameters as output of the neural network. In this regard, the neural network may be a trained neural network, which may be trained using training data defining seat part attributes as input and seat parameters as output and/or a ground truth defining seat parameters for predefined spatial configurations of seats in the vehicle cabin.

In embodiments, the one or more seat parameters are estimated using a lookup table. In further embodiments, when using a lookup table, the estimating the one or more seat parameters comprises deriving the one or more seat parameters from the lookup table using the detected one or more seat part attributes as parameters. In this regard, the lookup table may be a calibrated/preconfigured lookup table, which may be calibrated/preconfigured using various constellations of seat parameters (which may be indicative of one or more seat part attributes, such as e.g. specific point or location of the detected seat part in the one or more images).

In embodiments, the seat parts of a seat comprise one or more of a seat pad, a seat back rest, a seat head rest and a seat buckle, and/or the seat parameters of a seat comprise one or more of a seat track position, a seat recline angle and seat head rest position.

In embodiments, the one or more images are captured by an image capturing device, the vehicle capturing device being arranged in the vehicle cabin with a field of view including one or more seats in the vehicle cabin and/or being configured to capture color and/or infrared images.

According to an aspect of the present disclosure, there is provided a method, which may be regarded or referred to as method of facilitating vehicle operation or vehicle operation facilitating method and/or as method of operating a vehicle equipment or (vehicle equipment) operating method. The method comprises estimating one or more seat parameters of a seat in a vehicle cabin, on which a person is sitting, detecting, from one or more images of at least part of the vehicle cabin, one or more body parts of the person and, for each body part, a body part attribute, and controlling the vehicle equipment on the basis of the estimated one or more seat parameters and the detected one or more body part attributes of the person.

In embodiments, controlling the vehicle equipment comprises one or more of adjusting a setting or configuration of the vehicle equipment, and causing a predetermined operation of the vehicle equipment. In this regard, the vehicle equipment may comprise one or more of the seat, a seat part of the seat, a controller, an airbag, and an acoustic and/or visual output device. Further, when the vehicle equipment is at least one seat part of the seat, controlling the vehicle equipment may comprise adjusting the at least one seat part such that a seat parameter corresponding to the at least one seat part is adapted to the detected one or more body part attributes of the person.

In embodiments, a body part attribute comprises one or more of: a bounding box of the detected body part, the bounding box of a body part surrounding said body part in the one or more images, one or more keypoints of the detected body part, the one or more keypoints of a body part defining characteristic points of said body part in the one or more images, and an orientation of the detected body part, the orientation of a body part defining a spatial direction of said body part in the vehicle cabin.

In embodiments, the body parts of the person comprise one or more of a head and a torso of the person.

In embodiments, the one or more images are captured by an image capturing device, the vehicle capturing device being arranged in the vehicle cabin with a field of view including the seat and/or being configured to capture color and/or infrared images.

In embodiments, the seat parameters are estimated by performing the aforementioned method, which may be regarded or referred to as method of facilitating vehicle operation or vehicle operation facilitating method and/or as method of sensing a vehicle cabin or a (vehicle cabin) sensing method, including any one or more embodiments thereof.

According to an aspect of the present disclosure, there is provided an apparatus configured to perform the aforementioned method, which may be regarded or referred to as method of facilitating vehicle operation or vehicle operation facilitating method and/or as method of sensing a vehicle cabin or a (vehicle cabin) sensing method, including any one or more embodiments thereof.

In embodiments, the apparatus comprises one or means for carrying out the functions/steps of the method, such as e.g. means for detecting one or more seat parts and, for each detected seat part, a seat part attribute, and means for estimating one or more seat parameters of the at least one seat on the basis of the detected one or more seat part attributes.

In embodiments, the apparatus comprises at least one processor and program code, or circuitry, being configured to carry out the functions/steps of the method, e.g. to detect one or more seat parts and, for each detected seat part, a seat part attribute, and to estimate one or more seat parameters of the at least one seat on the basis of the detected one or more seat part attributes.

According to an aspect of the present disclosure, there is provided an apparatus configured to perform the aforementioned method, which may be regarded or referred to as method of facilitating vehicle operation or vehicle operation facilitating method and/or as method of operating a vehicle equipment or a (vehicle equipment) operating method, including any one or more embodiments thereof.

In embodiments, the apparatus comprises one or means for carrying out the functions/steps of the method, such as e.g. means for estimating one or more seat parameters of a seat in a vehicle cabin, on which a person is sitting, means for detecting one or more body parts of the person and, for each body part, a body part attribute, and means for controlling the vehicle equipment.

In embodiments, the apparatus comprises at least one processor and program code, or circuitry, being configured to carry out the functions/steps of the method, e.g. to estimate one or more seat parameters of a seat in a vehicle cabin, on which a person is sitting, to detect one or more body parts of the person and, for each body part, a body part attribute, and to control the vehicle equipment.

According to an aspect of the present disclosure, there is provided a system. The system comprises an image capturing device configured to capture one or images of at least part of a vehicle cabin, including at least one seat in the vehicle cabin. The system further comprises an apparatus configured to perform the aforementioned method, which may be regarded or referred to as method of facilitating vehicle operation or vehicle operation facilitating method and/or as method of sensing a vehicle cabin or a (vehicle cabin) sensing method, including any one or more embodiments thereof, and/or an apparatus configured to perform the aforementioned method, which may be regarded or referred to as method of facilitating vehicle operation or vehicle operation facilitating method and/or as method of operating a vehicle equipment or a (vehicle equipment) operating method, including any one or more embodiments thereof.

According to an aspect of the present disclosure, there is provided a computer program product comprising instructions which, when executed on a computer, cause the computer to perform the aforementioned method, which may be regarded or referred to as method of facilitating vehicle operation or vehicle operation facilitating method and/or as method of sensing a vehicle cabin or a (vehicle cabin) sensing method, including any one or more embodiments thereof, and/or the aforementioned method, which may be regarded or referred to as method of facilitating vehicle operation or vehicle operation facilitating method and/or as method of operating a vehicle equipment or a (vehicle equipment) operating method, including any one or more embodiments thereof.

According to an aspect of the present disclosure, there is provided a method combining, i.e. comprising the operations/functionalities of, the aforementioned method, which may be regarded or referred to as method of facilitating vehicle operation or vehicle operation facilitating method and/or as method of sensing a vehicle cabin or a (vehicle cabin) sensing method, including any one or more embodiments thereof, and the aforementioned method, which may be regarded or referred to as method of facilitating vehicle operation or vehicle operation facilitating method and/or as method of operating a vehicle equipment or a (vehicle equipment) operating method, including any one or more embodiments thereof. Also, a corresponding method, a corresponding system, and a corresponding computer program product are provided.

These and other objects, embodiments and advantages will become readily apparent to those skilled in the art from the following detailed description of exemplary embodiments having reference to the attached figures, the disclosure not being limited to any particular embodiments.

### BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements.
Fig. 1 is a flowchart illustrating a method of sensing a vehicle cabin.
Figs. 2A-2D are schematic diagrams illustrating exemplary detection results including examples of seat parts and examples of seat part attributes, and Fig. 2E is a schematic diagram illustrating a grid cube representing a lookup table for estimating one or more seat parameters.
Fig. 3 is a flowchart illustrating a method of operating a vehicle equipment.
Fig. 4 is a schematic diagram illustrating an exemplary detection result including examples of body parts and bounding boxes as examples of body part attributes.
Fig. 5 is a schematic diagram illustrating an exemplary detection result including examples of body parts and keypoints as examples of body part attributes.
Fig. 6 is a schematic diagram illustrating an exemplary detection result including examples of body parts and orientations as examples of body part attributes.
Fig. 7 is a schematic diagram illustrating an exemplary interior of a vehicle with possible camera positions.
Fig. 8 is a schematic diagram illustrating an exemplary representation of a computing system.

### DETAILED DESCRIPTION

Modern (or smart) vehicles, such as cars, busses, trucks and the like, are on their way to significantly improve the safety, comfort and/or personalization of passengers. Such smart vehicles may be equipped with one or more onboard cameras and may be capable of capturing images of the vehicle's interior, such as the vehicle cabin. Those images can then be used in combination with other sensors disposed at the seats of the vehicle, such as mechanical sensors or Hall effect sensors, for grasping the situation in the vehicle's interior.

For different safety, comfort and/or personalization related tasks, certain seat parameters are relevant and thus need to be detected. These seat parameters include e.g. seat track position, a seat recline angle (i.e. seat backrest angle) and seat head rest position. For detecting these seat parameters, sensors disposed at the seats of the vehicle, such as mechanical sensors or Hall effect sensors, are currently required.

Therefore, for proper detection of seat parameters relevant for different safety, comfort and/or personalization related tasks, the equipment of seats with sensors is required, leading to increased cost and cabling/wiring efforts as well as problems and less flexibility for retrofitting/upgrading corresponding functions.

While it would be desirable to be able to detect such seat parameters in a sufficiently reliable and/or accurate manner without the need of any seat-equipped sensors, there is currently no solution to this problem. Hence, there is room for improvement with respect to safety, comfort and/or personalization improvements for vehicles.

The present disclosure generally relates to safety, comfort and/or personalization improvements for vehicles and, in particular, to methods, apparatuses, systems and computer program products of sensing a vehicle cabin and/or operating a vehicle equipment.

In this regard, certain seat parameters, such as seat track position, seat recline angle (i.e. seat backrest angle) and seat head rest position, need to be detected which conventionally requires the equipment of seats with sensors, such as mechanical sensors or Hall effect sensors.

The present disclosure presents a solution for vehicle cabin sensing and vehicle equipment operation, referring to seat parameters, without the need of any seat-equipped sensors. More specifically, the present disclosure provides for techniques for image-based vehicle cabin sensing and vehicle equipment operation, in which relevant seat parameters are optically determined. Even though the relevant seat parameters cannot be directly measured optically, the techniques of the present disclosure enable their estimation in vehicle cabin sensing and thus their usage in vehicle equipment operation on the basis of one or more images of at least part of a vehicle cabin, while avoiding or at least mitigating ambiguities in the detection of seat parameters.

As an illustrative but non-limiting example, a seat track position and/or a seat recline angle can be optically estimated as seat parameters of a driver's seat in vehicle cabin sensing, and the driver's seat (as an example of a vehicle equipment), i.e. its positioning, can be controlled based on the thus estimated seat track position and/or seat recline angle in vehicle equipment operation. For example, the driver's seat can be (controlled to be) operated such that the seat track position and/or the seat recline angle are changed, e.g. the seat is driven towards the steering wheel and/or the backrest of the seat is driven into an upright position, for enabling the driver to take over control of the vehicle when this is required in a situation in which e.g. a level-3 autonomous driving mode is active but needs to be deactivated.

It is to be noted that the present disclosure is not limited to estimation of seat parameters of the driver's seat but can be applied to any seats in a vehicle cabin. For example, seat parameters of one or more front seats, e.g. the driver's seat and/or the passenger's seat, can be estimated.

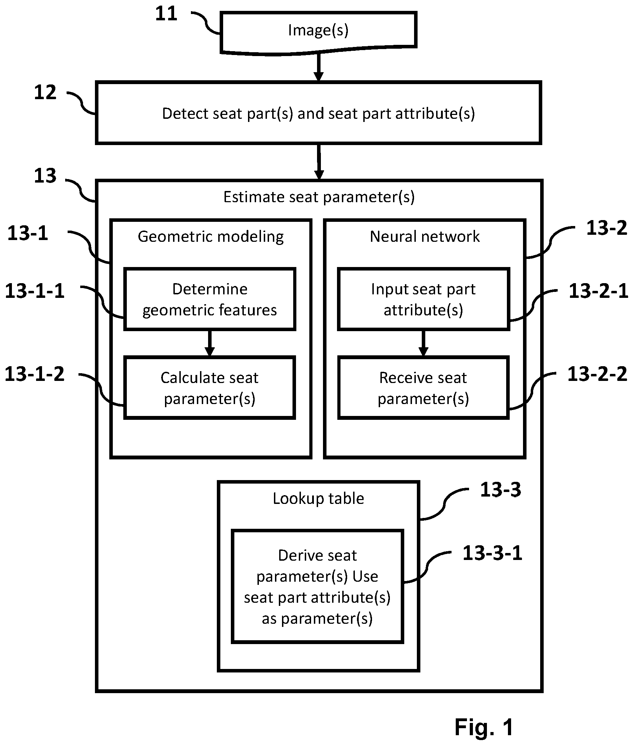

Fig. 1 is a flowchart illustrating a method, which may be regarded or referred to as method of facilitating vehicle operation or vehicle operation facilitating method and/or as method of sensing a vehicle cabin or (vehicle cabin) sensing method, which is in accordance with at least one embodiment.

As shown in Fig. 1, the method is based on one or more images of at least part of the vehicle cabin and may thus comprise inputting or receiving the images (box 11). The one or more images may be captured by an image capturing device, such as a camera, which is arranged in the vehicle cabin with a field of view including one or more (or all) seats in the vehicle cabin (and/or passengers sitting on these one or more seats), and/or is configured to capture color and/or infrared images. For example, an RGB-IR camera can be used, which can capture RGB (red, green blue) color as well as IR (infrared) spectrum.

Modern vehicles, in particular cars, can be equipped with one or more cameras. These cameras, which may comprise one or more of color or black/white cameras, infrared cameras, depth cameras, and heat cameras, can provide images of the vehicle cabin to internal components of the vehicle, such as an apparatus and/or computing system. The images may be taken in response to a triggering event, e.g. opening a door, interacting with a multi-media system of the vehicle, using a voice command, or the like, or at defined periodic or non-periodic time intervals. The images taken may then be used by a plurality of internal systems for different tasks, such as safety, comfort and/or personalization related tasks.

Images of the vehicle cabin may comprise full images showing the whole vehicle cabin (or interior), or may may depict only a partial region of the vehicle cabin (or interior), e.g. one front seat, one or more rear seats, or the like. If a camera captures the whole vehicle cabin (or interior), the images used in the method shown in Fig. 1 may be preprocessed image crops that have been extracted from one or more raw images for one or more regions in the vehicle cabin (or interior).

The method shown in Fig. 1 comprises detecting, from the one or more images, one or more seat parts of at least one seat in the vehicle cabin and, for each detected seat part, a seat part attribute (box 12), and estimating one or more seat parameters of the at least one seat on the basis of the detected one or more seat part attributes of the respective seat (box 13).

In the method, the one or more seat parameters may be estimated in any feasible manner. For example, as shown in Fig. 1, the seat parameters can be estimated using geometric modeling (box 13-1) or using a neural network (box 13-2) or using a lookup table (box 13-3). When using geometric modeling, seat parameter estimation may comprise determining geometric features of at least part of the detected one or more seat part attributes and/or a relationship between one or more groups of at least two detected seat part attributes (box 13-1-1), and calculating the one or more seat parameters on the basis of the determined geometric features (box 13-1-2). When using a neural network, seat parameter estimation may comprise inputting the detected one or more seat part attributes into the neural network (box 13-2-1), and receiving the one or more seat parameters as output of the neural network (box 13-2-2). When using a lookup table, seat parameter estimation may comprise deriving the one or more seat parameters from the lookup table using the detected one or more seat part attributes as parameters (box 13-3-1).

It is to be noted that at least the geometric modeling based approach/estimation and the neural network based approach/estimation can also be combined. For example, geometric features being determined may be used as (additional or only) input of a neural network (which is trained accordingly). For example, geometric features may be determined using a neural network (which is trained accordingly) and/or the seat parameter(s) may be calculated, based on geometric features being determined in any manner, using a neural network (which is trained accordingly).

The one or more seat parameters of a seat are indicative of a spatial configuration of the respective seat, and may comprise e.g. one or more of a seat track position, a seat recline angle (i.e. seat backrest angle) and seat head rest position. The one or more seat parts of the respective seat may comprise e.g. one or more of a seat pad, a seat back rest, a seat head rest and a seat buckle. The one or more seat part attributes may comprise e.g. a bounding box of the detected seat part, wherein the bounding box of a seat part surrounds said seat part in the one or more images.

Although not shown in Fig. 1, the method may further comprise estimating one or more seat parameters of a seat (of the one or more seats) in the vehicle cabin, on which a person is sitting, detecting, from the one or more images, one or more body parts of the person and, for each body part, a body part attribute, and controlling a vehicle equipment on the basis of the estimated one or more seat parameters and the detected one or more body part attributes of the person, wherein the controlling may comprises one or more of: adjusting a setting or configuration of the vehicle equipment and causing a predetermined operation of the vehicle equipment.

The vehicle equipment may comprise e.g. one or more of the seat, a seat part of the seat, a controller, an airbag, and an acoustic and/or visual output device. The body parts of the person may comprise e.g. one or more of a head and a torso of the person. The one or more body part attributes may comprise e.g. one or more of: a bounding box of the detected body part, wherein the bounding box of a body part surrounds said body part in the one or more images, one or more keypoints of the detected body part, wherein the one or more keypoints of a body part define characteristic points of said body part in the one or more images, and an orientation of the detected body part, wherein the orientation of a body part defines a spatial direction of said body part in the vehicle cabin.

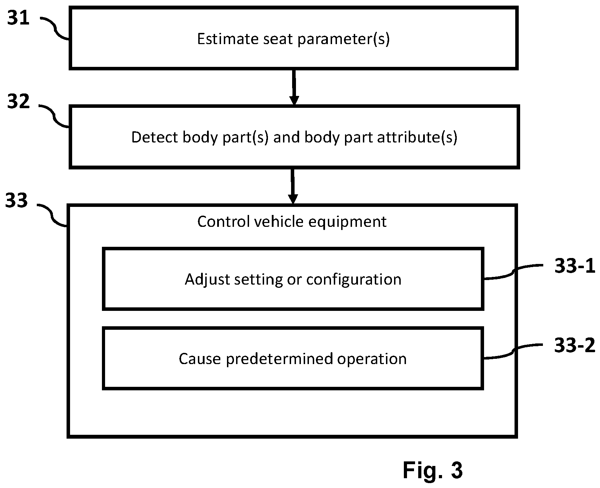

For further details regarding the optional additional operations/functionalities of estimating, detecting and controlling, as described above, reference is made to the description of the method, which may be regarded or referred to as method of facilitating vehicle operation or vehicle operation facilitating method and/or as method of operating a vehicle equipment or (vehicle equipment) operating method, as shown in Fig. 3.

It is to be noted that, while Fig. 1 is a flowchart illustrating a method, it can also be considered as a block diagram illustrating a corresponding apparatus or its internal structure/components. Namely, an apparatus configured to perform the method shown in Fig. 1 may comprise means, modules, components, circuitry, etc. for performing any one or more of the operations/functionalities as illustrated by/in blocks 11, 12 and 13.

In the following, examples and/or details of the aforementioned operation/functionality of detecting seat part(s) and related seat part attribute(s) are described.

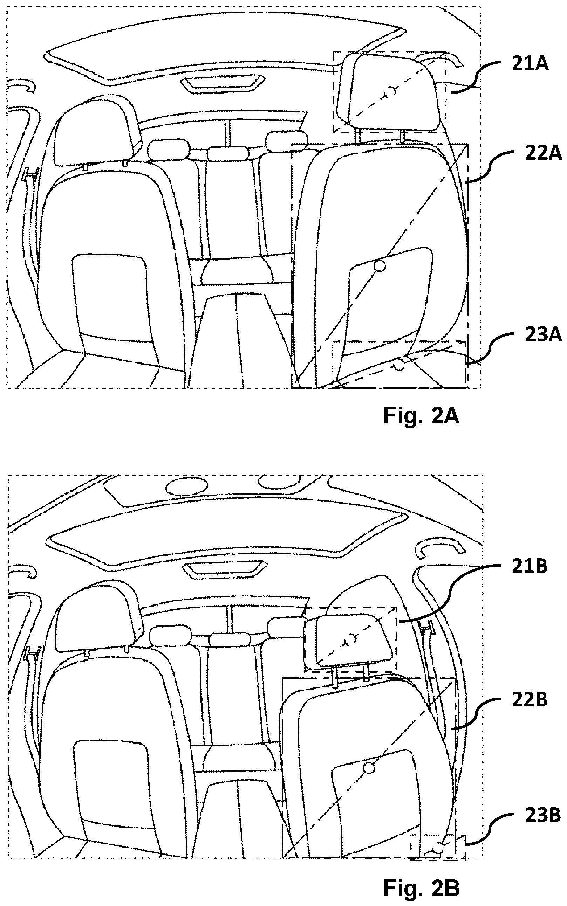

As shown in Figs. 2A-2D, specific parts of seats can be detected in the one or more images, e.g. in image frames. For any one of the thus detected seat parts, at least one seat part attribute is detected (as a basis for the subsequent seat parameter estimation). That is, any seat part attribute is able to be detected in an optical or, stated differently, image-based manner, and is relevant or effective for supporting estimation of one or more seat parameters. Accordingly, a seat part attribute may be regarded or referred to as proxy parameter for a seat parameter or seat parameter estimation.

The detection of the seat parts and the seat part attributes can be realized in several ways, e.g. any kind of object detection. For example, such optical or image-based (object) detection may be performed or assisted by various systems, concepts or methods like convolutional neural networks, such as e.g. Region-based Convolutional Neural Networks (R-CNN), Fast R-CNN, YOLO (You Only Look Once), or the like.

Fig. 2A illustrates an exemplary detection result in which, with respect to the front seat depicted on the right-hand side in the image, a bounding box (as an example of a seat part attribute) is detected for, i.e. around, a seat head rest (as an example of a seat part), which is denoted by 21A, a bounding box (as an example of a seat part attribute) is detected for, i.e. around, a seat back rest (as an example of a seat part), which is denoted by 22A, and a bounding box (as an example of a seat part attribute) is detected for, i.e. around, a seat pad (as an example of a seat part), which is denoted by 23A.

Fig. 2B illustrates an exemplary detection result in which, with respect to the front seat depicted on the right-hand side in the image, similar bounding boxes as illustrated in Fig. 2A are detected, which are denoted by 21B, 22B and 23B.

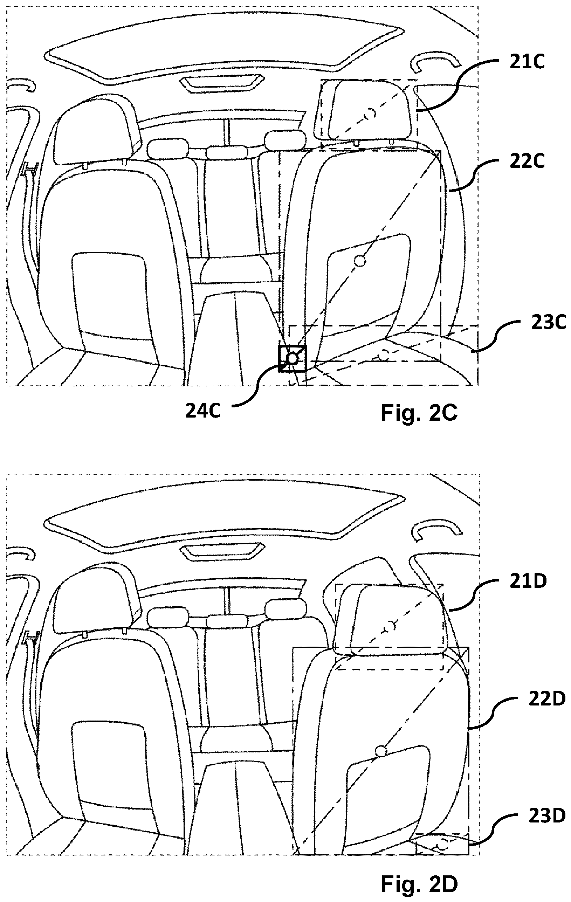

Fig. 2C illustrates an exemplary detection result in which, with respect to the front seat depicted on the right-hand side in the image, similar bounding boxes as illustrated in Fig. 2A are detected, which are denoted by 21C, 22C and 23C. Additionally, a bounding box (as an example of a seat part attribute) is detected for, i.e. around, a seat buckle (as an example of a seat part), which is denoted by 24C.

Fig. 2D illustrates an exemplary detection result in which, with respect to the front seat depicted on the right-hand side in the image, similar bounding boxes as illustrated in Fig. 2A are detected, which are denoted by 21D, 22D and 23D.

It is to be noted that one or more seat part attributes can be detected in/for each image or image frame, e.g. any one or more of the exemplarily illustrated bounding boxes for a seat head rest (cf. 21A, 21B, 21C, 21D), a seat back rest (cf. 22A, 22B, 22C, 22D), a seat pad (cf. 23A, 23B, 23C, 23D) and a seat buckle (cf. 24C).

While Figs. 2A-2D exemplarily illustrate detection result with respect to the front seat depicted on the right-hand side in the image, similar detection results can be obtained for any seat in the image, including one or more of the front seat on the left-hand side in the image and any one of the back seats, as long as the seats are depicted in the image. Although the detection results illustrated in Figs. 2A-2D are shown for an empty vehicle cabin, such detection results can also be obtained with one or more seats being occupied by a person.

In the following, examples and/or details of the aforementioned operation/functionality of estimating seat part parameter(s) are described.

As noted above, the seat part attributes, such as e.g. the bounding boxes as illustrated in any one of Figs. 2A-2D, which may be regarded or referred to as proxy parameters, are used as a basis for seat parameter estimation. This can be realized in several ways.

In an exemplary way, seat parameters can be estimated using geometric modeling.

First, geometric features of at least part of the detected one or more seat part attributes and/or a relationship between one or more groups of at least two detected seat part attributes are determined. In this regard, the seat part attributes may be encoded as multiple features.

For example, referring to the aforementioned bounding boxes, these features may comprise one or more of the following: a position of a detected bounding box (e.g. center point in 2D image coordinates, such as (x,y), as is illustrated by a circle on a diagonal of any one of the bounding boxes in Figs. 2A-2D), a size and/or shape of a detected bounding box (e.g. width and height), a relative horizontal and/or vertical 2D position between two or more detected bounding boxes (e.g. a relative position of center points of detected bounding boxes in a horizontal and/or vertical direction, a relative position of upper and/or lower limits of detected bounding boxes, such as the relative vertical position of a bounding box upper limit for a seat back rest and a bounding box lower limit for a seat head rest). Generally, any absolute and/or relative size or measure can be determined/encoded, which is effective for contributing to estimation of desired seat parameter(s).

It is to be noted that, in geometric feature determination/encoding, camera properties, such as e.g. view field, position (such as relative position, angle and/or distance with respect to seat in question) may also be considered/adopted.

Second, the one or more seat parameters are calculated on the basis of the determined/encoded geometric features. In this regard, a linear least-squares method or a Levenberg-Marquart (LM) algorithm may be utilized.

For example, an equation may be defined for a position of seat head rest and seat buckle in 2D image coordinates, given the actual (3D) location (or spatial configuration) of the seat head rest, the seat back rest and the seat buckle, which depends on seat track position and seat recline angle (as examples of seat parameters to be estimated). Then, the equation may be inverted to yield seat track position and seat recline angle as a function of the 2D (image) position of seat head rest and seat buckle. Further, a system of equations can be set up from multiple detections or detection results, such as multiple images, for the 2D (image) position of seat head rest and seat buckle. Finally, this system of equations can be solved, e.g. utilizing a linear least-squares method or a Levenberg-Marquart (LM) algorithm.

In an exemplary way, seat parameters can be estimated using a neural network.

In this regard, the detected one or more seat parts and/or seat part attributes are input into the neural network, and the one or more seat parameters are received as output of the neural network.

It is to be noted that the thus used neural network is a trained neural network which is trained accordingly, i.e. with respect to the provided input (data) and the expected output (data). For training, training data may be collected and used, which defines seat part(s) and/or seat part attribute(s) as input and target seat parameter(s) as output. For example, training data may comprise a number of data sets, each data set showing, for a particular seat location (i.e. an actual (3D) location (or spatial configuration) of the seat, including one or more of seat head rest, seat back rest, seta pad and seat buckle), data of the respective one or more seat parts and/or seat part attributes and data for the target seat parameter(s), such as one or more of seat track position, seat recline angle and seat head rest position. For training, a ground truth may be set and used, which defines seat parameters for predefined spatial configurations (i.e. actual (3D) locations) of seats in the vehicle cabin. For example, training data with seats placed in various (predefined) seat constellations may be collected, and the correlated seat parameters can be stored as ground truth. The neural network may be trained using training data and/or ground truth, e.g. as described above.

Alternatively, geometric features of the detected one or more seat parts and/or seat part attributes are input into the neural network, and the one or more seat parameters are received as output of the neural network.

It is to be noted that, here as well, the thus used neural network is a trained neural network which is trained accordingly, i.e. with respect to the provided input (data) and the expected output (data). The training data for training the neural network defines geometric features of the detected one or more seat parts and/or seat part attributes as input and target seat parameter(s) as output. The geometric features may be and may be determined/encoded, as is described above for geometric modeling, and thus reference is made accordingly for details.

Notwithstanding the above, it is to be noted that there are various possible (algorithmic) realizations for translating detected seat part attributes or determined/encoded geometric features based thereon into one or more target seat parameters.

In an exemplary way, seat parameters can be estimated using a lookup table.

In this regard, the detected one or more seat parts and/or seat part attributes are used as parameters so as to derive the one or more seat parameters from the lookup table.

The thus used lookup table may be calibrated and/or preconfigured (e.g. in an online or offline manner) such that the lookup table defines an association between at least one seat parameter and one or more seat part attributes, such as e.g. specific points or locations of the detected seat parts in the one or more images.

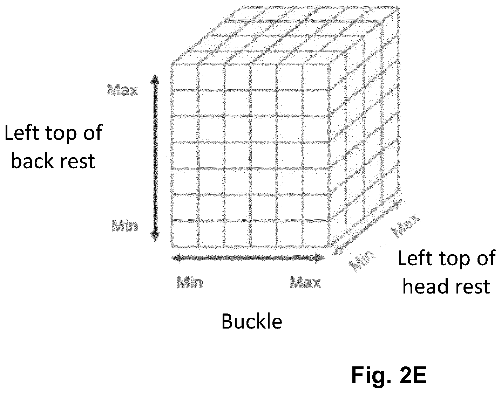

Fig. 2E is a schematic diagram illustrating a grid cube representing a lookup table (LUT) for estimating one or more seat parameters. In this example, the left top (point/location) of the back rest, the left top (point/location) of the head rest and (the point/location of) the buckle are used as parameters. The grids represent discrete steps of the LUT representing the at least one seat parameter to be estimated/derived, such as e.g. the seat track position and/or the seat recline angle.

For example, the calibration and/or preconfiguration of the lookup table (LUT) may be accomplished with the following steps or operations.

First, the space, in which three free seat parameters (e.g. seat track position, seat recline angle, head rest position) can be varied (between respective minimum and maximum values), is discretized. For example, the seat track position can be varied between -25cm (as forward position or minimum value) and +25cm (as backward position or maximum value) in steps of 5cm (relative to normal at 0cm) in a total of 10 steps, the seat recline angle can be varied between -30° (as full forward position or minimum value) and +60° (as full recline position or maximum value) in steps of 10° (relative to normal at 0°) in a total of 10 steps, and the head rest position can be varied between -10cm (as lowermost position or minimum value) and +10cm (as uppermost position or maximum value) in steps of 2cm (relative to normal at 0cm) in a total of 10 steps.

Second, various constellations of the seat parameters can be recorded, and it can be annotated or marked where N specific seat parts are visible in the one or more images. In this regard, specific points or locations of detected seat parts can be considered. For example, the left top (point/location) of the seat head rest, the left top (point/location) of the seat back rest and (the point/location of) the buckle can be taken as parameters. For example, N can be 3, such that 3 instances of each of the left top (point/location) of the seat head rest, the left top (point/location) of the seat back rest and (the point/location of) the buckle can be taken as parameters.

Third, the LUT, i.e. the LUT values, is calculated for discrete steps. The LUT values hold/represent the one or more seat parameters to be estimated. For example, the LUT values can hold/represent where, i.e. at which pixel location, in the one or more images the seat head rest and the buckle would project to.

Fig. 3 is a flowchart illustrating a method, which may be regarded or referred to as method of facilitating vehicle operation or vehicle operation facilitating method and/or as method of operating a vehicle equipment or (vehicle equipment) operating method, which is in accordance with at least one embodiment.

As shown in Fig. 3, the method comprises estimating one or more seat parameters of a seat in a vehicle cabin, on which a person is sitting (box 31) and detecting, from one or more images of at least part of the vehicle cabin, one or more body parts of the person and, for each body part, a body part attribute (box 32). Accordingly, similar to the method shown in Fig. 1, the method is based on one or more images of at least part of the vehicle cabin and may thus comprise inputting or receiving the images (although this is not shown in Fig. 3). For details regarding these images or capturing thereof, reference is made to the description of the method shown in Fig. 1.

It is to be noted that the estimation of the one or more seat parameters may be realized using the method shown in Fig. 1. Accordingly, box 31 may comprise the operations/functionalities of the method shown in Fig. 1. If so, the same one or more images can be used in the operation/functionality of box 31 and the operation/functionality of box 32. Also, the operation/functionality of box 32 does not need to be performed only after the operations/functionalities of boxes 11 to 13 are completed, but can be performed at least partly concurrently with the operation/functionality of box 12 and/or 13, for example.

As shown in Fig. 3, the method further comprises controlling the vehicle equipment on the basis of the estimated one or more seat parameters and the detected one or more body part attributes of the person (box 33).

In the method, the vehicle equipment may be controlled in any feasible manner. For example, as shown in Fig. 3, the vehicle equipment may be controlled by adjusting a setting or configuration of the vehicle equipment (box 33-1) and/or causing a predetermined operation of the vehicle equipment (box 33-2).

It is to be noted that the vehicle equipment may be controlled in response to determination/identification/etc. of (fulfillment of) one or more conditions, criteria or the like, such as e.g. overshooting or undershooting a predefined threshold. Any such condition, criterion or the like may depend on one or more of the estimated seat parameter(s) and/or one or more of the detected body part attributes and/or one or more other parameters. As one illustrative but non-limiting example, in response to identifying that the seat track position (i.e. the seat position) is less than a given distance (threshold) from the position of the airbag (e.g. the surface of a glove compartment), said control may comprise outputting a warning to the passenger and/or automatically adjusting the seat track position so that the position of the seat is above the given distance (threshold) the position of the airbag (which protects the passenger in case of a the airbag being triggered). As another illustrative but non-limiting example, in response to identifying that the vertical position of the seat head rest exceeds a given distance (threshold) to the head of a passenger, i.e. a person sitting on the corresponding seat, said control may comprise outputting a warning to the passenger and/or automatically adjusting the seat head rest so that the vertical position of the seat head rest is below the given distance (threshold) to the head of the passenger (which protects the passenger in case of a rear-end collision). Many more use cases are conceivable, with only some of them being outlined below as illustrative but non-limiting examples.

The vehicle equipment may comprise e.g. one or more of the seat, a seat part of the seat, a controller, an airbag, and an acoustic and/or visual output device. The body parts of the person may comprise e.g. one or more of a head and a torso of the person. The one or more body part attributes may comprise e.g. one or more of: a bounding box of the detected body part, wherein the bounding box of a body part surrounds said body part in the one or more images, one or more keypoints of the detected body part, wherein the one or more keypoints of a body part define characteristic points of said body part in the one or more images, and an orientation of the detected body part, wherein the orientation of a body part defines a spatial direction of said body part in the vehicle cabin.

When the vehicle equipment is at least one seat part of the seat, controlling the vehicle equipment may comprise e.g. adjusting the at least one seat part such that a seat parameter corresponding to the at least one seat part is adapted to the detected one or more body part attributes of the person sitting on the seat.

It is to be noted that, while Fig. 3 is a flowchart illustrating a method, it can also be considered as a block diagram illustrating a corresponding apparatus or its internal structure/components. Namely, an apparatus configured to perform the method shown in Fig. 3 may comprise means, modules, components, circuitry, etc. for performing any one or more of the operations/functionalities as illustrated by/in blocks 31, 32 and 33.

In the following, examples and/or details of the aforementioned operation/functionality of detecting body part(s) and related body part attribute(s) are described.

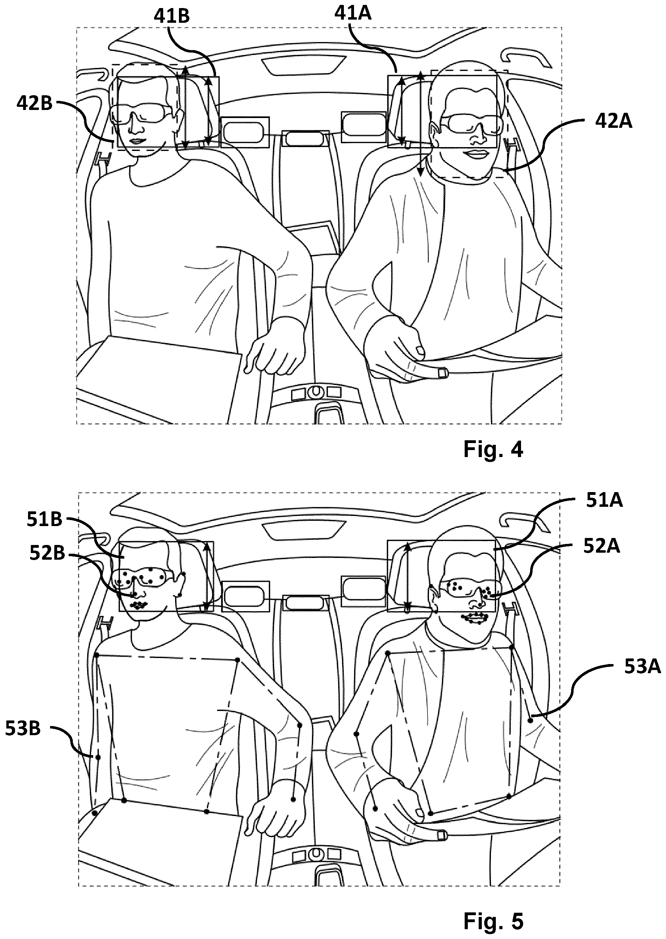

As shown in Figs. 4-6, specific parts of bodies (of persons) can be detected in the one or more images, e.g. in image frames. For any one of the thus detected body parts, at least one body part attribute (set) is detected (as a basis for the subsequent vehicle equipment control). That is, any body part attribute is able to be detected in an optical or, stated differently, image-based manner, and is relevant or effective for supporting control of a vehicle equipment.

The detection of the body parts and the body part attributes can be realized in several ways, e.g. any kind of object detection. For example, such optical or image-based (object) detection may be performed or assisted by various systems, concepts or methods like convolutional neural networks, such as e.g. Region-based Convolutional Neural Networks (R-CNN), Fast R-CNN, YOLO (You Only Look Once), or the like.

Fig. 4 illustrates an exemplary detection result in which, with respect to persons sitting on the two front seats, bounding boxes (as an example of body part attributes) are detected for, i.e. around, a face (as an example of a body part) of each of the two persons. In this figure, bounding boxes resulting from seat attribute detection (such as operation/functionality 12), which are bounding boxes for, i.e. around, seat head rests of the two front seats, are denoted by 41A and 41B, while bounding boxes resulting from body attribute detection (such as operation/functionality 32), which are bounding boxes for, i.e. around, faces of the two persons, are denoted by 42A and 42B.

Fig. 5 illustrates an exemplary detection result in which, with respect to persons sitting on the two front seats, keypoints (as an example of body part attributes) are detected for, i.e. on, a face and a torso (as examples of body parts) of each of the two persons. In this figure, bounding boxes resulting from seat attribute detection (such as operation/functionality 12), which are bounding boxes for, i.e. around, seat head rests of the two front seats, are denoted by 51A and 51B, while keypoint resulting from body attribute detection (such as operation/functionality 32), which are facial keypoints for, i.e. on, faces of the two persons, are denoted by 52A and 52B, and keypoints resulting from body attribute detection (such as operation/functionality 32), which are torso keypoints for, i.e. on, torsos of the two persons, are denoted by 53A and 53B. For further processing, the set of keypoints, a (2D or 3D) center (such as e.g. a gravity center) of the keypoints, any characteristic representation of the set of keypoints, or the like can be used.

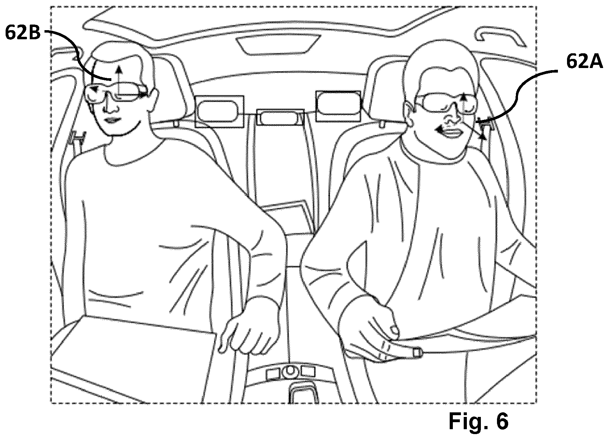

Fig. 6 illustrates an exemplary detection result in which, with respect to persons sitting on the two front seats, orientations (as an example of body part attributes) are detected for, i.e. of, a head (as an example of a body part) of each of the two persons. In this figure, orientations resulting from body attribute detection (such as operation/functionality 32), which are orientations for, i.e. of, heads of the two persons, are denoted by 62A and 62B. As shown here, the orientation may be given/depicted in the axis directions of the 3D (image) coordinate system. It is to be noted that no bounding boxes resulting from seat attribute detection (such as operation/functionality 12) are shown in Fig. 6 for the sake of lucidity. Although not shown, such bounding boxes can also be present in a corresponding image, e.g. bounding boxes for, i.e. around, seat head rests of the two front seats, as denoted by 41A and 41B in Fig. 4 as well as 51A and 51B in Fig. 5.

It is to be noted that one or more body part attributes can be detected in/for each image or image frame, e.g. any one or more of the exemplarily illustrated facial bounding boxes (cf. 42A, 42B), facial keypoints (cf. 52A, 52B), torso keypoints (cf. 53A, 53B) and head orientations (cf. 62A, 62B).

While Figs. 4-6 exemplarily illustrate detection result with respect to two persons sitting on the front seats, similar detection results can be obtained for any seat in the image, including one or more of the front seat on the left-hand side in the image and any one of the back seats, and a person sitting thereon, as long as the seats and (the relevant body parts) of the persons are depicted in the image. The detection results can be obtained for any number of seats and persons. Although any one of the detection results illustrated in Figs. 4-6 illustrates body part attributes of similar/equal type only (i.e. only bounding boxes, only keypoints, only orientations), detection results with mixed types of body part attributes (e.g. a facial bounding box and facial keypoints, a facial bounding box and a head orientation) can be obtained.

In the following, examples and/or details of the aforementioned operation/functionality of controlling a vehicle equipment are described.

As noted above, the body part attributes, such as e.g. the bounding boxes, keypoint and/or orientations as illustrated in Figs. 4-6, are used as a basis for vehicle equipment control. This can be realized in several ways.

For illustrative purposes, referring to Figs. 4-6, a use case of an (automatic) adjustment of the seat head rest for a person sitting on a corresponding seat, i.e. the person's size, posture, etc., is explained. An optimally adjusted seat head rest, i.e. adjusted to the occupying person, can avoid serious injuries in the event of a rear-end collision. To determine if the seat head rest is well adjusted to the occupying person and, if desired/required, to automatically adjust the seat head rest, the additional detections of the person occupying the seat, i.e. the aforementioned body part attributes, can be used. Depending on various criteria, such as e.g. expected accuracy, one or more types of body part attributes can be used, e.g. bounding box around a face (cf. Fig. 4), 2D/3D keypoints (cf. Fig. 5), which may be facial and/or torso keypoints, and head orientation (cf. Fig. 6).

With a bounding box around the face of the person on a corresponding seat, an optimal seat head rest position can be determined relative to the face position. As shown in Fig. 4, the face position can be grasped with respect to the seat head rest position when/by comparing the respective bounding boxes, e.g. their relative (2D) vertical position, their overlapping, or the like.

Similarly, facial keypoints can be used to determine if the seat head rest is adjusted well and, if desired/required, determine an optimal seat head rest position relative to the face position. The facial keypoints can be used to determine the seat head rest position relative to the head of the person. As shown in Fig. 5, the face position can be grasped with respect to the seat head rest position when/by comparing the respective bounding box of the seat head rest position and the facial keypoints, e.g. their relative (2D) vertical position, their overlapping, or the like. Additional torso keypoints can be used to determine the person's body posture which can be additionally used in determining an optimal seat head rest position. If the person is sitting in a "normal" (upright) position, the optimal seat head rest position can be calculated relative to the person's head. If the person is not sitting in a "normal" (upright) position, but e.g. in a flexed or lying position, calculating the optimal seat head rest position relative to the person's head may be impossible or unfavorable, and a corresponding warning or indication may be presented to the person (e.g. in a visual and/or acoustic manner).

Identifying or having identified the person's head orientation (e.g. in additional to the person's face/head position) can refine the calculation of an optimal seat head rest position. Identifying or having identified the 3D location of the seat head rest and the person and/or his or her facial and/or torso keypoints can further enhance the precision of the seat head rest adjustment. As evident from Fig. 6, the optimal seat head rest position (at least in terms of the inclination and/or the position in the vehicle/longitudinal direction) depends on the head's posture. Accordingly, information on the person's head orientation, e.g. the extent of leaning forward, can be suitably applied in determining an optimal seat head rest position relative to the person's head position.

Accordingly, the optimal position of a seat head rest (i.e. its setting or configuration) can be adjusted. Also, the thus adjusted optimal position of the seat head rest can be established, e,g, by causing at least one (electric) motor to be operated so as to move the seat head rest into the thus adjusted optimal position (i.e. a predetermined operation can be caused).

Notwithstanding the above, it is to be noted that there are various possible use cases and/or realizations for controlling a vehicle equipment on the basis of seat parameter(s) of a seat and body part attribute(s) of a person sitting on the seat.

Generally, as noted above, certain seat parameters are relevant for different safety, comfort and/or personalization related tasks. The techniques described herein can thus be applied in the context of any such tasks. Accordingly, a target vehicle equipment and its target control, e.g. the adjusting its setting or configuration and/or causing a predetermined operation thereof, can differ depending on the task in question.

For example, the correct positioning of a seat and its (free) seat parameters (e.g. seat track position, seat recline angle, seat head rest position) in a vehicle facilitates several aspects of safe driving. For instance, (1) identifying or having identified how close the front seat is relative to the position of the airbag can be used to deploy the airbag differently or to warn the passenger, i.e. a person sitting on the corresponding seat, e.g. when the seat is too near, (2) identifying or having identified the vertical position of the seat head rest relative to the head of a passenger, i.e. a person sitting on the corresponding seat, can be used to warn the passenger or to automatically adjust the seat head rest so that the passenger is optimally protected in case of a rear-end collision, (3) identifying or having identified the seat track position and the seat recline angle of the seat can support estimation of the person's height using a 2D camera, which in turn is effective e.g. to differentiate adults from children for proper airbag deployment and regulatory compliance, or the like.

For example, the positioning of a seat, including its (free) seat parameters (e.g. seat track position, seat recline angle, seat head rest position), in a vehicle is relevant in the context of autonomous driving. For instance, in the context of e.g. a level-3 take-over scenario (i.e. a situation in which the driver shall take over control in e.g. a level-3 autonomous driving mode), identifying or having identified the seat recline angle of the driver's seat can be used to estimate the take-over time, i.e. the time it takes for the driver to get into a position enabling active driving. In such situation, the seat recline angle can be automatically adjusted when it is expected that the driver will have to take over control again soon, or the driver can be warned if the estimated take-over time is too long, e.g. above a predefined threshold.

For example, the positioning of a seat, including its (free) seat parameters (e.g. seat track position, seat recline angle, seat head rest position), in a vehicle can be utilized for comfort and/or personalization purposes. When identifying or having identified the seat track position and the seat recline angle (and the seat head rest position), the mirrors, such as e.g. the outside mirrors, can be properly adjusted in view of the thus expected position of the driver's head.

In vehicles with electronically adjustable seats, the estimated seat parameters can be used to automatically position the seat accordingly, e.g. for optimal visibility, passenger safety, passenger comfort, passenger personalization, or the like. In vehicles with manually adjustable seats, the estimated seat parameters can be used to provide a warning or live feedback signal to the passenger, e.g. for informing the passenger, prompting the passenger to perform a corresponding adjustment, or the like.

It is to be noted that the methods described herein can be carried out when the vehicle stands still or is turned off, but can also be carried out when the vehicle is turned on or even during driving. The methods described herein can be triggered, initiated or performed on a regular basis, e.g. upon lapse of a predefined time, or on an event basis, e.g. upon occurrence of a certain event.

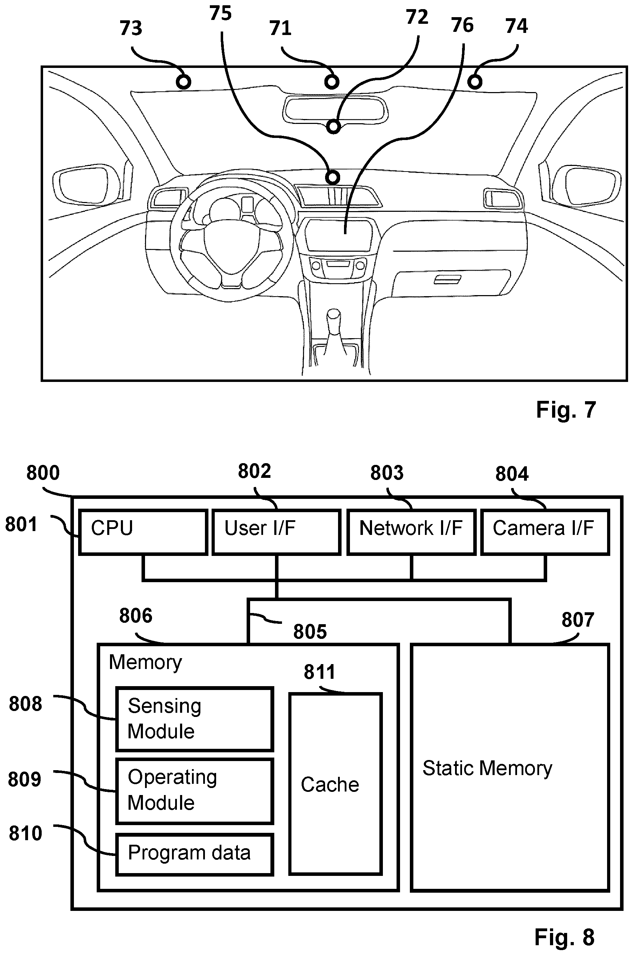

Fig. 7 is a schematic diagram illustrating an exemplary interior of a vehicle with possible camera positions.

The vehicle may only comprise one camera but also a plurality of cameras at different positions. With two or more cameras a depth image or 3D image may be created. The cameras, which may be color or black/which cameras, infrared cameras, depth cameras, heat cameras, or a combination thereof, can be placed, e.g., in the middle over the front windshield and even over the rearview mirror as illustrated with position 71. Additionally or alternatively, the or another camera can be located below the rearview mirror as illustrated with position 72. If one camera is located at position 73, another one will usually also be located at position 74 but this is not mandatory. Additionally or alternatively, the or another camera can be located at the dashboard or in the middle console as depicted with position 75. Each of the positions 91 to 95 may also comprise two cameras co-located for enabling a 3D view of the interior of the vehicle.

Cameras may capture images, e.g., at regular time intervals or if trigged by an application that requires to estimate a seat parameter and/or control a vehicle equipment, as described herein. The applications using the images may be executed on the onboard computing system or at least in part executed remotely, e.g. in the cloud. The result of the applications may not only output a warning or control signal but also trigger a display on a vehicle's main display 76 at the middle console. The vehicle's main display may also be located in another position, e.g. at the dashboard behind the steering wheel.

Fig. 8 is a schematic diagram illustrating an exemplary representation of a computing system. The schematic diagram may be understood to represent internal components of a computing system 800 implementing one or more of methods or operations/functionalities, as described herein. The computing system 800 may be located in the vehicle and includes at least one processor 801 (such as e.g. a Central Processing Unit (CPU)), a user interface 802, a network interface 803 and a main memory 806, that communicate with each other via a bus 805. Optionally, the computing system 800 may further include a static memory 807 and a disk-drive unit (not shown) that also communicate with each via the bus 805. A video display, an alpha-numeric input device and a cursor control device may be provided as examples of user interface 802.

Furthermore, the computing system 800 may also comprise a camera interface 804 to communicate with an onboard camera of the vehicle. Alternatively, the computing system 800 may communicate with the camera via the network interface 803. The camera is used for capturing the images, as described above. The computing system 800 may also be connected to database systems (not shown) via the network interface 803, wherein the database systems store at least part of the images needed for providing the methods or operations/functionalities, as described herein.

The main memory 806 may be a random-access memory (RAM) and/or any further volatile memory. The main memory 806 may store program code for a sensing module 808 and/or an operating module 809, which implement the methods or operations/functionalities, as described herein. Other modules needed for further operations or functionalities described herein may be stored in the memory 806. The memory 806 may also store additional program data 810 required for providing the methods or operations/functionalities, as described herein, or other methods or operations/functionalities. Parts of the program data 810, the sensing module 808 and/or the operating module 809 may also be stored in a separate, e.g. cloud memory and executed at least in part remotely. For example, the main memory 806 may store data about one or more of the detected seat part(s) and seat part attribute(s), the estimated seat parameter(s), the detected body part(s) and body part attribute(s), etc. according to the methods described herein in a cache 811.

According to an embodiment, a vehicle is provided. The methods herein described may be stored as modules or program codes 808, 809 or 810 and may be at least in part comprised by the vehicle. Parts of the modules or program codes 808, 809 or 810 may also be stored and executed on a cloud server to reduce the computational effort on the vehicle's computing system 800. The vehicle may also comprise one or more cameras, e.g., connected via the camera interface 804, for capturing one or more images.

According to an embodiment, any one of the methods described herein, such as the methods shown in Figs. 1 and 3, can be realized as computerized methods or computer-implemented methods. For example, the methods may be implemented in software such as an application and/or may be carried out by software such as an application.

According to an embodiment, a computer program comprising instructions is provided. These instructions, when the program is executed by a computer, cause the computer to carry out any one of the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects or features of the techniques described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles of the present disclosure, and to provide a number of specific examples, methods and arrangements for putting those principles into effect.

In certain embodiments, the operations/functionalities and/or acts specified in the flowcharts, sequence diagrams, and/or block diagrams may be re-ordered, processed serially and/or processed (at least partly) concurrently without departing from the scope of the present disclosure. Moreover, any of the flowcharts, sequence diagrams and/or block diagrams may include more or fewer blocks than those illustrated consistent with certain embodiments of the present disclosure.

The terminology used herein is for the purpose of describing particular embodiments only and is not intended to be limiting (the embodiments of) the present disclosure. It will be further understood that the terms "comprise" and/or "comprising", when used in this specification, specify the presence of stated features, integers, steps, operations, elements and/or components, but do not preclude the presence or addition of one or more other features, integers, steps, operations, elements, components and/or groups thereof. Furthermore, to the extent that the terms "include", "having", "has", "with", "comprised of" or variants thereof are used in either the detailed description or the claims, such terms are intended to be inclusive in a manner similar to the term "comprising".

While a description of various embodiments has illustrated the techniques of the present disclosure and while these embodiments have been described in considerable detail, it is not intended to restrict or in any way limit the scope of the appended claims to such detail. Additional advantages and modifications will readily appear to those skilled in the art. The present disclosure in its broader aspects is therefore not limited to the specific details, representative apparatuses and methods and/or illustrative examples shown and described herein. Accordingly, the described embodiments should be understood as being provided by way of example, for the purpose of teaching the general features and principles of the present disclosure, but should not be understood as limiting the scope thereof, which is as defined in the appended claims.

The present disclosure provides for techniques for image-based vehicle cabin sensing and vehicle equipment operation. Such measures include a method comprising detecting, from one or more images of at least part of the vehicle cabin, one or more seat parts of at least one seat in the vehicle cabin and, for each detected seat part, a seat part attribute, and estimating one or more seat parameters of the at least one seat on the basis of the detected one or more seat part attributes, the one or more seat parameters of a seat being indicative of a spatial configuration of the seat in the vehicle cabin.

## Claims

1. A method of facilitating vehicle operation, comprising:
detecting, from one or more images of at least part of the vehicle cabin, one or more seat parts of at least one seat in the vehicle cabin and, for each detected seat part, a seat part attribute, and
estimating one or more seat parameters of the at least one seat on the basis of the detected one or more seat part attributes, the one or more seat parameters of a seat being indicative of a spatial configuration of the seat in the vehicle cabin.

2. The method according to claim 1, wherein a seat part attribute comprises
a bounding box of the detected seat part, the bounding box of a seat part surrounding said seat part in the one or more images, and/or
a specific point or location of the detected seat part in the one or more images.

3. The method according to claim 1 or 2, wherein the one or more seat parameters are estimated using geometric modeling or a neural network or a lookup table.

4. The method according to claim 3, wherein estimating the one or more seat parameters using geometric modeling comprises:
determining geometric features of at least part of the detected one or more seat part attributes and/or a relationship between one or more groups of at least two detected seat part attributes, and
calculating the one or more seat parameters on the basis of the determined geometric features.

5. The method according to claim 4, wherein
the geometric features comprise one or more of a position of a seat part attribute, a size of a seat part attribute, a shape of a seat part attribute, a relative two-dimensional, horizontal and/or vertical position between two or more seat part attributes, and/or
calculating the one or more seat parameters utilizes a linear least-squares method or a Levenberg-Marquart algorithm.

6. The method according to claim 3, wherein estimating the one or more seat parameters using a neural network comprises:
inputting the detected one or more seat part attributes into the neural network, and
receiving the one or more seat parameters as output of the neural network.

7. The method according to claim 3, wherein estimating the one or more seat parameters using a lookup table comprises:
deriving the one or more seat parameters from the lookup table using the detected one or more seat part attributes as parameters.

8. The method according to any one of claims 1 to 7, wherein
the seat parts of a seat comprise one or more of a seat pad, a seat back rest, a seat head rest and a seat buckle, and/or
the seat parameters of a seat comprise one or more of a seat track position, a seat recline angle and a seat head rest position.

9. The method of any one of claims 1 to 8, wherein one or more seat parameters of a seat in the vehicle cabin are estimated, on which a person is sitting, the method further comprising
detecting, from the one or more images, one or more body parts of the person and, for each body part, a body part attribute, and
controlling the vehicle equipment on the basis of the estimated one or more seat parameters and the detected one or more body part attributes of the person.

10. The method according to claim 9, wherein controlling the vehicle equipment comprises one or more of:
adjusting a setting or configuration of the vehicle equipment, and
causing a predetermined operation of the vehicle equipment.

11. The method according to claim 9 or 10, wherein
the vehicle equipment comprises one or more of the seat, a seat part of the seat, a controller, an airbag, and an acoustic and/or visual output device, and/or
the body parts of the person comprise one or more of a head and a torso of the person.

12. The method according to any one of claims 9 to 11, wherein a body part attribute comprises one or more of:
a bounding box of the detected body part, the bounding box of a body part surrounding said body part in the one or more images,
one or more keypoints of the detected body part, the one or more keypoints of a body part defining characteristic points of said body part in the one or more images, and
an orientation of the detected body part, the orientation of a body part defining a spatial direction of said body part in the vehicle cabin.

13. An apparatus configured to perform the method according to any one of claims 1 to 12.

14. A system, comprising:
an image capturing device configured to capture one or images of at least part of a vehicle cabin, including at least one seat in the vehicle cabin, and
the apparatus according to claim 13.

15. A computer program product comprising instructions which, when executed on a computer, cause the computer to perform the method according to any one of claims 1 to 12.
